# EUROPEAN PATENT APPLICATION

(11) **EP 1 006 702 A2**
(43) Date of publication of application: **07.06.2000**
(21) Application number: 99309720.3
(22) Date of filing: 03.12.1999
(51) Int. Cl.: H04L 29/14, H04L 12/56

(54) **Method and apparatus providing for an improved VRRP (Virtual Router Redundancy Protocol)**

(30) Priority: 04.12.1998 US 205084
(71) Applicant: NORTEL NETWORKS CORPORATION, Montreal, Quebec H2Y 3Y4 (CA)
(72) Inventor: Srikanth, Ayikudy K, Reading, Massachusetts 01867 (US); Mujeeb, Hamayon, Chelmsford, Massachusetts 01824 (US); Meehan, Tom, New York, 10002 (US)
(74) Representative: Dearling, Bruce Clive

(57) **Abstract**

A router attached to a network is a member of a virtual router for the network in accordance with VRRP. A port or interface on the router other than a port that attaches the router to the network is specified as critical. VRRP is not enabled for the critical port. (Alternatively, VRRP may be enabled for the critical port to provide routing redundancy for a different network and would not affect the virtual router associated with this network). If the critical port on a master virtual router fails or is otherwise unable to forward packets, a state change is nevertheless triggered within the VRRP finite state machine that exists at the port on the master virtual router for which VRRP is enabled. The change in the VRRP finite state machine triggers the router to transition from the master virtual router to the new backup virtual router. The master virtual router can directly notify the backup virtual router to transition to master virtual router by transmitting a VRRP packet commanding the backup virtual router to become the master virtual router.

## Description

The present invention is related to data communications. In particular, the present invention is related to providing improved routing redundancy in a statically configured routing environment using the virtual routing redundancy protocol (VRRP).

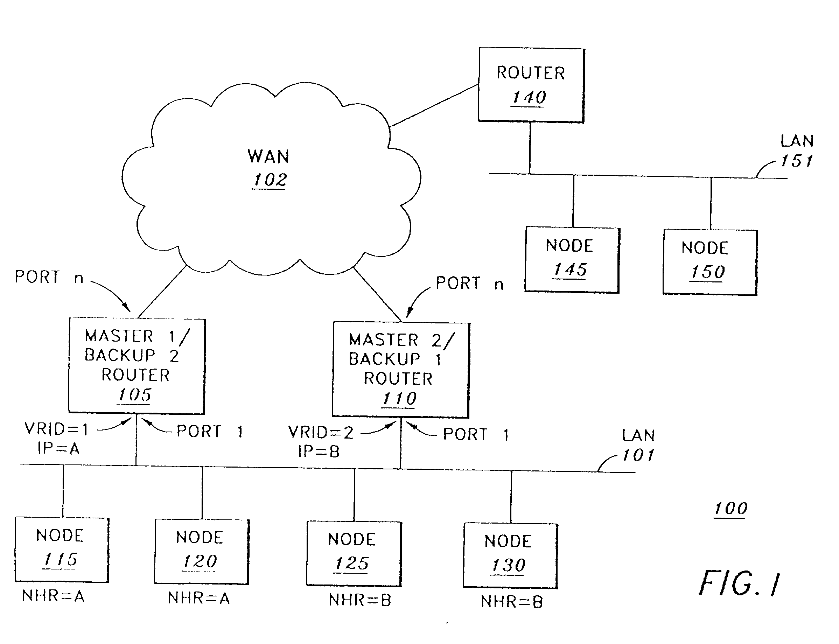

The Transport Control Protocol/Internet Protocol (TCP/IP) suite of data communication protocols is used in many of today's internetnetworks (internets). A TCP/IP-based internet provides a data packet switching system for communication between nodes (e.g., end-user workstations, servers, network devices, etc.) connected to the internet. With reference to Figure 1, international Standards Organization (ISO) Open Systems Interconnection (OSI) Networklayer devices105, 110, and 140, known as routers or switches, select a path and forward, i.e., route, IP datagrams between nodes connected to the internet 100. For example, internet 100 includes local area networks (LANs) 101 and 151, and wide area network (WAN) 102 interconnected by routers 105, 110 and 140. The routers route IP datagrams, for example, between nodes 115, 120, 125 and 130 attached to LAN 101 and nodes 145 and 150 attached to LAN 151.

As can be seen from Figure 1, routers 105 and 110 provide multiple paths for transmitting IP datagrams from source nodes on LAN 101 to destination nodes on other IP networks in the internet, and vice versa. To prevent generating and forwarding duplicate IP datagrams over the internet, each of the nodes on LAN 101 transmits a unicast IP datagram to only one of routers 105 and 110 as a next hop, or first hop, router. The next hop router forwards the datagram to a destination node on another IP network in the internet that is reachable via the router, or to a subsequent next hop router if the destination node is more than one hop away form the source node. As is well known in the art, a next hop router can be statically configured at each node as the default router (also referred to as a default gateway) towards other IP networks. However, a static default router configuration provides a single point of failure in the event the default router becomes unavailable. To overcome this problem, next hop routers can be dynamically configured at each node, using a dynamic routing protocol such as the well known Routing Information Protocol (RIP) or Open Shortest Path First (OSPF) dynamic routing protocols. However, the reliability provided by a dynamic routing protocol is at the expense of node and router processing overhead, network overhead, interoperability problems, etc.

The single point of failure inherent in a static next hop router configuration can be overcome through the use of the Virtual Router Redundancy Protocol (VRRP). VRRP, as set forth in the Internet Society's Request For Comments 2338, April, 1998, is an election protocol that assigns responsibility to a master virtual router, wherein the master virtual router is one of two or more VRRP based routers attached to a LAN. VRRP provides dynamic fail-over in forwarding responsibility if the master virtual router, selected as one of the two or more VRRP routers on the LAN, becomes unavailable. In essence, and as explained in detail in RFC 2338, VRRP provides a redundant, relatively more reliable default path for transmission of IP datagrams destined to nodes on other IP networks.

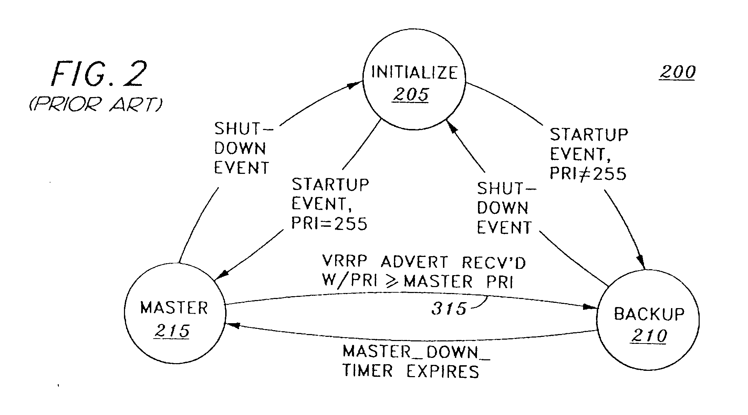

For a better appreciation and understanding of the present invention, a brief review of the VRRP protocol follows. In the network illustrated in Fig. 2, routers 105 and 110 operate according to the VRRP. VRRP has as its basis the concept of a virtual router - an abstract object that operates as a default router for nodes attached to the LAN. In network 100, two virtual routers are configures: virtual router 1, and virtual router 2. In general, the scope of a virtual router is restricted to a single LAN, and each virtual router comprises a master and one or more backup routers. For example, router 105 is the master virtual router and router 110 is the backup virtual router for virtual router 1. The master and backup virtual routers share the same virtual router identifier (VRID = 1), same IP address (IP = A), and the same VRRP-based MAC address (00-00-5E-00-01-{VRID} (h), e.g., the VRRP based MAC address of virtual router 1 is 00-00-5E-00-01-01 (h). Conversely, router 110 is the master virtual router and router 105 the backup virtual router for virtual router 2, which has a VRID = 2, IP address = B, and VRRP-based MAC address of 00-00-5E-00-01-02(h).

In particular, an identical VRRP based MAC address is assigned to an entry port of each master and backup virtual routers having the same VRID. For example, port 1 of router 105 and port 1 of router 110, the respective entry ports for the master and backup virtual routers for virtual router 1, are assigned a VRRP-based MAC address of 00-00-5E-00-01-{VRID}(h), wherein {VRID} is the VRID assigned to the ports. Thus, port 1 of router 105, given a VRID of 1, is assigned a VRRP based MAC address of 00-00-5E-00-01-01 (h). Moreover, routers can, and often do, belong to multiple virtual routers. Thus, port 1 of each of the routers participating in virtual router 2 is assigned a VRRP-based MAC address of 00-00-5E-00-01-02. It is further appreciated that in addition to the VRRP based MAC addresses assigned to port 1 of routers 105 and 110, each port also has a unique 48-bit MAC address, typically burned into ROM at the time of manufacture.

In accordance with VRRP, the master virtual router functions as the forwarding router for the IP address associated with the virtual router. With reference to Fig. 2, nodes 115 and 120 are statically configured with a default next hop router IP address of "A", while nodes 125 and 130 are statically configured with a default next hop router IP address of "B". (Splitting the nodes between redundant routers in this manner provides load balancing and other advantages well known in the art). For example, router 105 is the master virtual router for virtual router 1, has an IP address of "A" assigned to port 1, and forwards IP datagrams received at port 1 from the nodes having a statically configured default next hop router IP address of "A".

The master virtual router periodically transmits advertisements to the backup virtual router(s) on the local network to indicate to the backup(s) that it is still functioning as the master virtual router. If master virtual router 1 fails, the backup virtual router 1 takes over as the new master virtual router 1, providing routing capability for nodes 115 and 120. Since both routers share the same IP address ("IP A") on their respective entry ports, (port 1) and both share the VRRP based media access control (MAC) address on their respective entry ports, no reconfiguration of the static default next hop router IP address is required at each of the nodes that transmit IP datagrams destined for nodes on other IP networks to virtual router 1. Likewise, if master virtual router 2 fails, backup virtual router 2 provides routing for nodes 125 and 130.

Fig. 2 illustrates a prior art finite state machine 200 for VRRP. An instance of the finite state machine exists for each virtual router in which a VRRP based router is participating. For example, router 105 is a master virtual router in virtual router 1, and a backup virtual router in virtual router 2. Hence, two instances of the finite state machine exist on router 105. In particular, each instance of the finite state machine is associated with a port on VRRP based router. Thus, router 105 has two instances of the VRRP finite state machine associated with port 1 - one instance for virtual router 1, and a second instance for virtual router 2. A VRRP based router begins in initialize state 205, and on a startup event either transition to a master state 215 of a backup state 210, based on its priority. If the router's priority is high, e.g., 255, it transitions to a master state upon the occurrence of a startup event. If the router's priority is less than 255, it transitions to a backup state upon the occurrence of a startup event. In either state, the router returns to the initialize state 205 upon the occurrence of a shutdown event.

Master virtual routers periodically transmit VRRP advertisements to the appropriate ports of other routers participating in the virtual router, using IP multicast datagrams. If a master virtual router, i.e., a virtual router in master state, receives a VRRP advertisement from a backup virtual router, i.e., a virtual router in backup state, with a priority greater than the master virtual router's priority, or with a priority equal to the master virtual router's priority and a greater IP address (the IP address acts as a tiebreaker), the master virtual router transitions to backup state 210. Conversely, the backup virtual router transitions to master state 215 upon expiration of a master_down_timer, i.e., the backup virtual router fails to receive an advertisement from the master virtual router for a period of time equal to master_down_timer. What is needed is the ability to transition a port associated with the VRRP finite state machine from a master state to a backup state in the event of failure of another port not associated with the VRRP finite state machine.

The present invention relates to an improvement, or extension of, the virtual routing redundancy protocol (VRRP), as set forth in the Internet Society's Request For Comments 2338 (RFC 2338). In a network that has multiple redundant paths over which packets may be forwarded by VRRP based routers to another network, nodes attached to the network dynamically select which of the routers will forward packets to nodes attached to the other network. VRRP is enabled at the port on each router that attaches the router to the network. A method is described for transitioning responsibility among the routers for routing data packets from the network to another network. One router is initialized to function as a mater virtual router for the network. At least a second router is initialized to function as a backup virtual router for the network. If a port fails on the master virtual router other than the port that attaches the router to the network, even though VRRP is not enabled on the failed port, the master virtual router nevertheless transitions to function as the backup virtual router for the network. The backup virtual router, meanwhile, either times out waiting to receive an advertisement from the master virtual router that would indicate the master virtual router is still functioning as the master virtual router for the network, or the master virtual router, after transitioning to become the new backup virtual router, sends a VRRP packet to the backup virtual router indicating the backup virtual router should become the new master virtual router for the network.

The present invention is illustrated by way of example and not limitation in the following figures, in which:

Figure 1 is a diagram of a data communications internetwork.

Figure 2 is a diagram of a finite state machine for a prior art virtual router redundancy protocol.

Figure 3 is a diagram of a finite state machine for an improved virtual router redundancy protocol as may be embodied by the present invention.

Described is an improved virtual router redundancy protocol. In the following description, numerous specific details are set forth in order to provide a thorough understanding of the present invention. It will be apparent, however, to one of ordinary skill in the art that the present invention may be practised without these specific details. In other instances, well-known architectures, steps, and techniques have not been shown to avoid unnecessarily obscuring the present invention. For example, specific details are not provided as to whether the method is implemented in a switch as a software routine, hardware circuit, firmware, or a combination thereof. Indeed, with respect to an existing network, operation functionality provided by a software upgrade could be supported by the download of code through the network itself.

In alternative embodiments, the present invention may be applicable to implementations of the invention in integrated circuits or chip sets, wireless implementations, switching systems products and transmission systems products. For purposes of this application, the terms switching systems products shall be taken to mean private branch exchanges (PBXs), central office switching systems that interconnect subscribers, toll/tandem switching systems for interconnecting trunks between switching centers, and broadband core switches found at the center of a service provider's network that may be fed by broadband edge switches or access multiplexors, and associated signalling, and support systems and services. The term transmission systems products shall be taken to mean products used by service providers to provide interconnection between their subscribers and their networks such as loop systems, and which provide multiplexing, aggregation and transport between a service provider's switching systems across the wide area, and associated signalling and support systems and services.

According to the present invention, VRRP packets are multicast between VRRP based routers participating in a virtual router. The VRRP packets each specify the priority and the state of the router associated with the Virtual Router Identifier (VRID) included in the VRRP packet. The VRID, of course, identifies the virtual router for which the packet is providing status. Each VRRP packet specifies the priority of the sending VRRP router. Generally, the higher the priority value, the higher the priority, e.g., 255 is highest priority, whereas priority decreases from 255 to 1. Zero (0) is a special priority that the master virtual router uses in a VRRP packet when it wants to give up its role as the master virtual router. VRRP packets are multicast each advertisement_interval, generally every second. If a backup virtual router fails to receive a VRRP advertisement packet from the master virtual router within a period of time defined by master_down_interval, which is calculated as (3*advertisement_interval) + skew_time seconds, the backup virtual router considers the master virtual router as down, or unavailable, wherein skew_time is the time in seconds to skew the master_down_interval by ((256 - priority)/256) seconds. A master_down_timer expires at a backup virtual router when an advertisement is not received during the master_down_interval. If an advertisement from the master virtual router is received by a backup virtual router with a priority of 0, the master_down_timer is set to skew_time, so that a transition from backup virtual router (state 210) to master virtual router (state 215) occurs more quickly than otherwise.

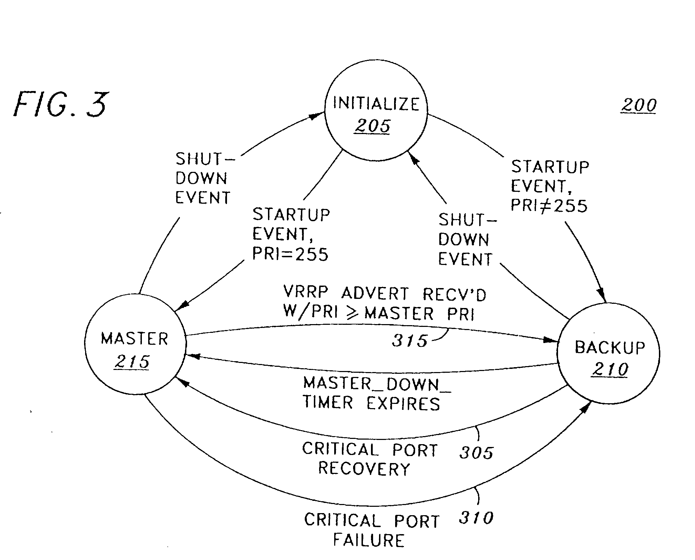

With reference to Figs. 2 and 3, an instance of the finite state machine exists for each virtual router in which a VRRP based router is participating. Thus, for example, two instances of the finite state machine exist at port 1 of router 105 - one for virtual router 1 and the second instance for virtual router 2. Likewise, two instances of the finite state machine exist at port 1 of router 110. An entry port of a VRRP based router begins in initialize state 205, and on a startup event either transitions to a master state 215 or a backup state 210, based on its priority. If the router ports priority is higher priority than the priority of ports on other routers participating in the virtual router, it transitions to a master state upon the occurrence of a startup event. If the router port's priority is not the highest priority, it transitions to a backup state upon the occurrence of a startup event. In either state, the router port returns to the initialize state 205 upon the occurrence of a shutdown event. Importantly, as depicted at 310, when a port fails other than the entry port of the virtual router with which VRRP is associated, the entry port in the master state immediately transitions to backup state. At the same time, a VRRP advertisement 305 is transmitted to the entry port of the backup virtual router indicating the entry port of the backup virtual router should immediately transition to master state. This allows router redundancy and fail-over protection for routing of IP traffic in instances where, although the master virtual router is not unavailable, has not timed out, nor experienced a shutdown event, the master virtual router can nevertheless transfer responsibility for forwarding IP traffic to a backup virtual router.

This aspect of the present invention allows a network administrator or the like to specify a critical port or interface on a router that is unrelated to VRRP. In the event the critical port on the master virtual router fails or is otherwise unable to forward packets, e.g., IP datagrams, such failure or unavailability triggers a state change within the VRRP finite state machine that exists at the port on the master virtual router that is related to VRRP. The change in the finite state machine triggers the router to transition from master state 215 to backup state 210. Additionally, rather than waiting for the backup virtual router to detect the unavailability of the master virtual router by way of expiration of the master_down_timer, the master virtual router may directly notify the backup virtual router to transition to master virtual router by transmitting a VRRP formatted packet commanding the backup virtual router to become the master virtual router, as indicated by the change of state at 305 from backup state 210 to master state 215.

Additionally, if the critical port recovers, i.e., becomes available again after failing, the virtual router, presently the backup virtual router, transitions from backup state 210 to master state 215, thus becoming the master virtual router again. This transition may be accomplished either by the present backup virtual router sending a VRRP message to the present master virtual router upon recovery of the critical port on the present backup virtual router, as indicated at 305 in Figure 3. Alternatively, a VRRP message is transmitted by the present backup virtual router specifying a priority greater than the priority of the present master virtual router (if the priority is the same, the IP address or some other such mechanism may be used as a tie breaker), causing the present master virtual router to transition to the backup virtual router, as depicted at 315.

In accordance with the invention, there is provided a method for transitioning responsibility for routing data traffic among routers in a network in which a first router is coupled to the network via a first port and a second router is coupled to the network via a first port, the method comprising:-
a) configuring the first router to function as a master virtual router for the network; and
b) configuring the second router to function as a backup virtual router for the network; and
c) if a port on the first router other than the first port fails, transitioning the first router to function as the backup virtual router for the network and transitioning the second router to function as the master virtual router for the network.

## Claims

1. A method for transitioning responsibility for routing data traffic among routers in a network in which a first router is coupled to the network via a first port and a second router is coupled to the network via a first port, the method comprising:-
a) configuring the first router to function as a master virtual router for the network; and
b) configuring the second router to function as a backup virtual router for the network; and
c) if a port on the first router other than the first port fails, transitioning the first router to function as the backup virtual router for the network and transitioning the second router to function as the master virtual router for the network, there being provided transitioning means operable to effect the aforesaid transitioning of the first and second routers.

2. A method as claimed in Claim 1 wherein, responsive to the port on the first router other than the first port suffering failure and subsequently becoming re-available, the first router is transitioned to function as the master virtual router for the network and the second router is transitioned to function as the backup virtual router for the network.

3. The method for transitioning responsibility for routing data traffic among routers in a network according to claim wherein 1 or 2,
transitioning the first router to the backup virtual router and
transitioning the second router to the master virtual router is responsive to failure of a critical port of the first router.

4. The method of claim 3, wherein responsive to the critical port on the first router suffering failure and subsequently becoming re-available again, the first router is transitioned to function as the master virtual router and the second router is transitioned to function as the back-up virtual router.

5. The method of any preceding claim, wherein configuring the first router as a master virtual router comprises configuring a priority for the first router, the priority determining that the first router becomes the master virtual router, and network preferably operating a virtual routing redundancy protocol (VRRP) and wherein the priority is a VRRP priority.

6. The method of any preceding claim, wherein configuring the second router as a backup virtual router comprises configuring a priority for the second router, the priority determining that the second router becomes the backup virtual router, the network preferably operating a virtual routing redundancy protocol (VRRP) and wherein the priority for the second router is a VRRP priority.

7. The method for transitioning responsibility for routing data traffic among routers in a network according to any preceding claim, further comprising transmitting a message, upon failure of the port on the first router, from the first router to the second router that instructs the second router to become the new master virtual router, and transitioning the first router to become the new backup virtual router.

8. The method of claim 7, wherein transmitting a message from the first router to the second router comprises transmitting a virtual routing redundancy protocol message from the first router to the second router.

9. The method of any one of claims 1 to 6, further comprising: at the second router, periodically receiving a multicast advertisement generated from the first router else causing the second router to become the new master router after a predetermined time has elapsed in which the multicast advertisement has not been received by the second router.

10. A computer program element comprising computer program code means to make a computer-controlled router execute procedure to perform the method steps of any preceding claim.

11. The computer program element of claim 10, embodied on a computer readable medium.

12. Electronic signals representing instructions or statements to make a computer-controlled router execute procedure to perform the method steps of any of claims 1 to 9, wherein the electronic signals are adapted for transmission over a communication network.

13. A network having a first router coupled to the network via a first port and a second router coupled to the network via a first port, the network including means for transitioning responsibility for routing data traffic among the routers, said means being operable:-
to initialise the first router to function as a master virtual router for the network;
to initialise the second router to function as a backup virtual router for the network;
and to transition responsibility in response to failure of a port on the first router other than the first port in order to transition the first router to function as the backup router for the network and in order to transition the second router to function as the master virtual router for the network.
